# EUROPEAN PATENT APPLICATION

(11) **EP 3 089 068 A1**
(43) Date of publication of application: **02.11.2016**
(21) Application number: 14879417.5
(22) Date of filing: 21.04.2014
(51) Int. Cl.: G06F 21/51, G06F 9/445

(54) **APPLICATION PROGRAM MANAGEMENT METHOD, DEVICE, TERMINAL, AND COMPUTER STORAGE MEDIUM**

(30) Priority: 26.01.2014 CN 201410036973
(71) Applicant: ZTE Corporation, Shenzhen, Guangdong 518057 (CN)
(72) Inventor: JIANG, Min, Shenzhen Guangdong 518057 (CN)
(74) Representative: Awapatent AB
(86) International application number: PCT/CN2014/075828
(87) International publication number: WO 2015/109668

(57) **Abstract**

Disclosed in an embodiment of the present invention are an application program management method and an application program management device, a terminal and a computer storage medium, wherein the method includes: acquiring a list of permissions declared by an application program, and displaying an interface indicating whether individual permissions in the list of permissions are granted to the application program; and according to the acquired operations on the interface, identifying whether the individual permissions in the list of permissions are granted to the application program in a permission control table.

## Description

### Technical Field

The present invention relates to security management technologies in the field of mobile communications, and more particularly, to an application program management method and an application program management device, a terminal and a computer storage medium.

### Background of the Related Art

According to statistics, up to October 2013, the occupancy of smart phones based on Android platform reached 52% of all smart phones. More and more developers and manufacturers favor Android platform because it has the features such as open source, free and easy to develop and the like, and Android terminals in the market emerge in an explosive growth way.

An Android platform can freely download APK format application programs from the Internet to install, and many criminals tamper application programs, and even specifically develop application programs to deceive users to install. Problematic application programs after the installation may increase users' call and data flow charges by means of calling and downloading application programs and the like on the background, and bring losses to users; with the rise of mobile banking and online shopping, some Android application programs bring huge losses to users by stealing the users' short messages, call records, bank card numbers, and so on.

Google has strict control on permissions of application programs on the Android platform itself: classifying and describing access permissions (hereinafter referred to as permissions) of various objects (also may be understood as system resources of Android) within the Android framework in the form of "Android.Permission", for example, android.permission.CALL_PERMISSIONSD represents allowing the application program to make calls, android.permission.READ_CONTACTS represents allowing the application program to read users' contact data; currently there are one hundred permissions described by "android.Permission".

If an application program does not declare (which may be understood as "require") the permission corresponding to a system resource to the Android system before running, Android will reject the application program to access the system resource or perform related operations. The APK package of each application program comprises an AndroidMainifest.xml file, and the file further lists in detail the system resource required by the application program in addition to the library and operation dependencies when the application program is running. When a programmer develops an application program, the programmer needs to explicitly declare its permissions to the Android system by setting the field of uses-permission in the file.

When an application program is installed, the system will list a list of permissions corresponding to system resources that the application program needs to use for the user to view, the user has only two choices: first, opening all the declared permissions to the application program to allow the application program to continue the installation; second, not opening all the declared permissions to the application program, canceling the installation of the application program; since the user must agree all the permissions declared by an application program in order to install the application program, some application programs may have permissions that are not required for implementing the application programs. For example: a novel reading application program simply needs a networking permission, but if the application program has declared unnecessary permissions such as positioning, sending short messages, making phone calls, viewing contacts, and viewing the local machine phone number and the like, it will risk the user data security, causing that the user charges are maliciously consumed.

In summary, although the Android system lists a list of permissions that an application program needs when the application program is installed, even if the user is aware of some of the permissions not required to run the application program, in order to use the application program, the permissions declared by the application program still need to be granted, which could result in problems that the private information in the terminal is illegally acquired, user charges are maliciously consumed and the like, and the user's personal safety and property safety suffer heavy losses.

### Summary of the Invention

The embodiment of the present invention provides an application program management method and an application program management device, and a terminal and a computer storage medium to manage permissions declared by application programs, so as to protect data security of terminals and protect user charges from being maliciously consumed.

The embodiment of the present invention provides an application program management method, comprising:
acquiring a list of permissions declared by the application program, displaying an interface indicating whether individual permissions in the list of permissions are granted to the application program;
according to acquired operations on the interface, identifying whether individual permissions in the list of permissions are granted to the application program in a permission control table.

Preferably, the method further comprises:
when determining that the application program needs to access system resources corresponding to a first permission, controlling operations of the application program accessing the system resources according to the list of permissions declared by the application program as well as the permission control table.

Preferably, said controlling operations of the application program accessing the system resources according to the list of permissions declared by the application program as well as the permission control table comprises:
determining whether the first permission has been declared in the list of permissions of the application program;
if yes, controlling the operations of the application program accessing the system resources according to the permission control table; otherwise, returning no permission for accessing the system resources corresponding to the first permission to the application program.

Preferably, said controlling the operations of the application program accessing the system resources according to the permission control table comprises:
according to the permission control table, determining whether the first permission is granted to the application program;
if yes, allowing the operations executed for the application program accessing the system resources corresponding to the first permission, and returning an execution result to the application program;
otherwise, simulating the operations executed for accessing the system resources corresponding to the first permission, and returning a simulated execution result to the application program.

Preferably, said simulating the operations executed for accessing the system resources corresponding to the first permission and returning a simulated execution result to the application program comprises:
calling a preset simulation function, simulating the operations executed for the application program accessing the system resources corresponding to the first permission, returning an operation failure message to the application program, or returning forged data to the application program; or,
generating a simulation function for the current operations of the application program, calling the simulation function to simulate the operations executed for the application program accessing the system resources corresponding to the first permission, returning an operation failure message to the application program, or returning forged data to the application program; or
for the first permission, generating a corresponding simulation function, calling the simulation function to simulate the operations executed for the application program accessing to the system resources corresponding to the first permission, returning an operation failure message to the application program, or returning forged data to the application program.

Preferably, parameters of the permission control table comprises: name of the application program, a permission declared by the application program, and whether the declared permission is granted to the application program.

Preferably, when displaying the interface indicating whether the individual permissions in the list of permissions are granted to the application program, the method further comprises: displaying system resources corresponding to each permission in the list of permissions, as well as risks brought after granting the permissions in the list of permissions to the application program.

The embodiment of the present invention further provides an application program management device, comprising:
an acquisition module, configured to acquire a list of permissions declared by an application program;
a display module, configured to display an interface indicating whether individual permissions in the list of permissions are granted to the application program;
an identification module, configured to identify whether individual permissions in the list of permissions are granted to the application program according to acquired operations on the interface in a permission control table.

Preferably, the device further comprises:
a control module, configured to, when determining that the application program needs to access system resources corresponding to the first permission, control operations of the application program accessing the system resources according to the list of permissions declared by the application program as well as the permission control table.

Preferably, the control module further comprises: a determination unit, a first control unit and a second control unit;
the determination unit is configured to determine whether the first permission has been declared in the list of permissions of the application program;
if yes, trigger the first control unit to control the operations of the application program accessing the system resources according to the permission control table; otherwise, trigger the second control unit to return no permission for accessing the system resources corresponding to the first permission to the application program.

Preferably, the first control unit is further configured to:
according to the permission control table, determine whether the first permission is granted to the application program;
if yes, allow the operations executed for the application program accessing the system resources corresponding to the first permission, and return an execution result to the application program;
otherwise, simulate the operations executed for accessing the system resources corresponding to the first permission, and return a simulated execution result to the application program.

The embodiment of the present invention further provides a terminal, comprising the abovementioned application program management device.

The embodiment of the present invention further provides a computer storage medium, in which computer-executable instructions are stored and used for executing the abovementioned application program management method.

In the embodiment of the present invention, by providing users with an interface, the users are allowed to choose whether to grant the permissions to the application program, so as to facilitate managing the operations of accessing the system resources corresponding to the permissions of the application program, it effectively avoids the problems of affecting the data security as well as maliciously consuming user charges, which are brought due to granting unnecessary permissions to the application program.

### Brief Description of Drawings

FIG. 1 is a first flow chart of implementing an application program management method in accordance with an embodiment of the present invention;
FIG. 2 is a schematic diagram of an application program management interface in accordance with an embodiment of the present invention;
FIG. 3 is a second flow chart of implementing the application program management method in accordance with an embodiment of the present invention;
FIG. 4 is a schematic diagram of the structure of an application program management device in accordance with an embodiment of the present invention.

### Specified Embodiments

Hereinafter, in conjunction with the accompanying drawings, exemplary embodiments of the present invention will be described in detail. Although the exemplary embodiments of the present invention are illustrated in the accompanying drawings, it should be understood that the present invention may be implemented in various forms and should not be limited to the embodiments set forth herein. Rather, these embodiments are provided to have a more thorough understanding of the present invention, and fully convey the scope of the present invention to those skilled in the art.

In the embodiment of the present invention, the permissions declared by an application program are acquired, and an interface indicating whether individual permissions in the list of permissions are granted to the application program is displayed; thus, the user may manage permissions declared by each application program, for example, the user may allow the permissions declared by the application program or reject the permissions declared by the application program; for the permission of the application program which is rejected to be granted by the user, when the application program requests to operate the system resources corresponding to the permission that is rejected to be granted, a forged operation result is returned to the application program to deceive the application program, so as to achieve the purpose of properly running the application program and avoid potential threats of the application program to data security and user charges security.

Hereinafter, in conjunction with the accompanying drawings and the embodiments, the present invention will be described in further detail. It should be understood that the specified embodiments described herein are merely for explaining the present invention, rather than limiting the present invention.

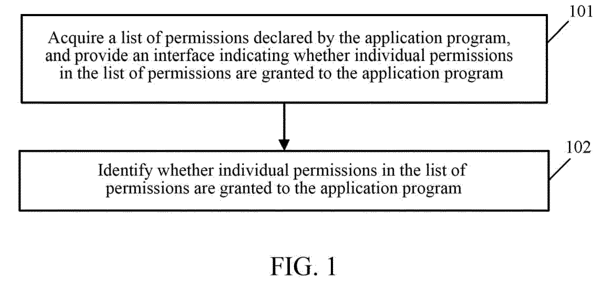

The embodiment of the present invention describes an application program management method, and FIG. 1 is a first flow chart of implementing the application program management method in accordance with an embodiment of the present invention, and as shown in FIG. 1, the following steps are included:
in step 101, it is to acquire a list of permissions declared by the application program, provide an interface indicating whether individual permissions in the list of permissions are granted to the application program.
It should be noted that, the step 101 may be executed when detecting that the terminal installs the application program, or be executed when the trigger operation that the user needs to manage the permissions declared by the application program is received after the application program is installed.

The permissions in the list of permissions correspond to system resources in the terminal, such as the system resources for making calls and system resources for sending short messages.

An example of the list of permissions is shown in Table 1:

**Table 1**

| | | |
|---|---|---|
| Application 1 | Permission 1 | Permission 2 |

As shown in Table 1, the application program 1 declares the permission 1 and the permission 2 in the list of permissions, that is, when the application program 1 is running, the application program 1 needs to use the system resources corresponding to the permissions 1 and the system resources corresponding to the permission 2.

As an embodiment, in step 101, for each permission in the list of permissions, when the interface indicating whether the permissions are granted to the application program is provided, for each permission, system resources corresponding to each permission, and risks that may be brought after authorizing (i.e., granting the permissions to the application program) may also be displayed.

In step 102, according to the acquired operations on the interface, it is to identify in the permission control table whether individual permissions in the list of permissions are granted to the application program.

Wherein, parameters in the permission control table comprise: name of the application program, permissions declared by the application program, as well as whether the application program is authorized (that is, whether the declared permissions have been granted to the application program).

An example of the permission control table is shown in Table 2:

**Table 2**

| Application program | Permission 1 | Permission 2 |
|---|---|---|
| | Authorized | Unauthorized |

As shown in Table 2, the application program 1 declares the permission 1 and the permission 2, wherein, the permission 1 is granted to the application program 1, but the permission 2 is not granted to it, that is, the application program 1 is only allowed to access the system resources corresponding to the permission 1.

After step 102, when the application program is running, if the application program needs (may also be understood as "request") to access system resources corresponding to a permission, it is to control the operations of the application program accessing the system resources according to a list of permissions declared by the application program, as well as the permission control table:
For example, when the application program is running, if the application program needs to access the system resources corresponding to the first permission (the first permission may be a permission corresponding to any system resources), first, it is to determine whether the first permission has been declared in the list of permissions of the application program; if not, it illustrates that the application program is performing operations not related to its own function, no permission for accessing the system resources is returned to the application program, and the operation ends;
if the first permission has been declared in the list of permissions of the application program, it is to determine whether the application program is allowed to access the system resources according to the permission control table, and if yes, the application program is allowed to access the system resources corresponding to the first permission, and return an operation result to the application program; if not, the operations executed for the application program accessing the system resources corresponding to the first permission is simulated, and a simulated execution result is returned to the application program.

Wherein simulating the operations executed for the application program accessing the system resources corresponding to the first permission and returning a simulated execution result to the application program may be in the following ways:
In the first way, it is to call a preset simulation function, simulate the operations executed for the application program accessing the system resources corresponding to the first permission, and return an operation failure message to the application program, or return forged data to the application program, and the simulation way may maximally save the system resources.
In the second way, it is to generate a simulation function for the current operations of the application program, call the simulation function to simulate the operations of accessing the system resources, return an operation failure message to the application program, or return forged data to the application program; the simulation way processes system resources corresponding to different permissions, the simulation way is a strongly-targeted way;
In the third way, for the first permission, it is to generate a corresponding simulation function to simulate the operations executed for the application program accessing the system resources corresponding to the first permission, or return the operation failure message to the application program, or return forged data to the application program; the simulation way processes system resources corresponding to different permissions, the simulation way is a strongly-targeted way.

In the following, the abovementioned technical solution of the embodiment of the present invention will be described in detail.

According to the technical solution of the embodiment of the present invention, the management of the application program comprises the following steps:
In step 1, when the terminal installs the application program, it is to acquire a list of permissions declared by the application program.

The step 1 may also be as follows: when the terminal receives a trigger operation of the user, it is to acquire the list of permissions of the application program; wherein the trigger operation is used to trigger the management of the permissions declared by the application program.

In step 2, the terminal displays the list of permissions declared by the application program, and provides an interface indicating whether individual permissions in the list of permissions are granted to the application program.

The interface is a man-machine interactive interface receiving user operations, for example, the terminal may display prompt information such as "yes" or "no" on the man-machine interactive interface to remind the user to instruct whether to grant the permissions declared by the application program.

In step 3, it is to receive operations on the interface, and for each permission declared by the application program, it is to record whether the permission is granted to the application program in the permission control table according to the operations.

In step 4, when the application program is running, it is to manage the application program.

When the application program needs to access system resources corresponding to the first permission (the first permission is a permission corresponding to any system resources), it is to first determine whether the application program declares the first permission, if not, no first permission is returned to the application program;
if the application program has declared the first permission, according to the permission control table, it is to determine whether the user grants the first permission to the application program, if yes, the application program is allowed to access the system resources corresponding to the first permission, and return an execution result to the application program, otherwise, the operations executed for the application program accessing the system resources corresponding to the first permission is simulated, and a simulated execution result is returned to the application program, in order to achieve the purpose of deceiving the application program, to guarantee the data security of the terminal, and avoid malicious consumption of charges.

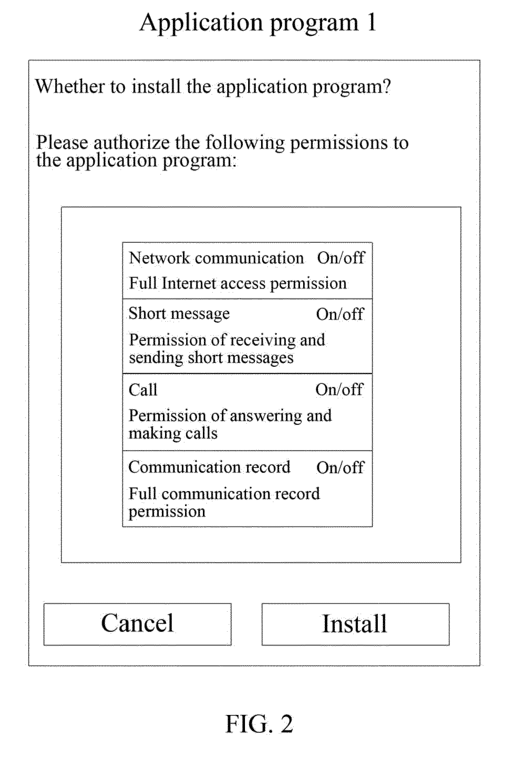

In the following, the processing procedure of installing the application program 1 is taken as an example to describe the embodiments of the present invention. FIG. 2 is a schematic diagram of the application program management interface in accordance with an embodiment of the present invention, and when the application program is installed, the terminal reads the list of permissions declared by the application program from the configuration file of the application program;
the terminal displays the prompt message of "whether to install the application program" on the man-machine interactive interface shown in FIG. 2, and displays the permissions declared by the displayed application program, and functions of the permissions; as shown in FIG. 2, the permissions declared by the application program 1 and the functions of the permissions comprise:
network communication function, full Internet access permission;
short message function, permissions of receiving and sending short messages;
call function, permissions of answering and making calls;
communication record function, and full communication recording permission;

For each permission, the terminal provides a management interface, that is, the "on/off" shown in FIG. 2, for example, when the user selects the "on" operation in the entry corresponding to "answering and making calls permission", the terminal determines that the user grants the permission to the application program 1; for another example, when the user selects the "off" operation in the entry corresponding to the "permissions of receiving and sending short messages", the terminal determines that the user rejects to grant the permission to the application program 1;
when the terminal receives the trigger operation of "installation" shown in FIG. 2, the terminal records the permissions declared by the application program 1, as well as whether individual permissions declared by the application program 1 are granted to the application program 1 in the permission control table, and an example of the permission control table is shown in table 3:

**Table 3**

| program name | Permission | Whether to authorize |
|---|---|---|
| Application 1 | full Internet access permission | Yes |
| Application 1 | Permissions of receiving and sending short messages | No |

| Application 1 | Permissions of answering and making calls | No |
|---|---|---|
| ...... | ...... | ...... |

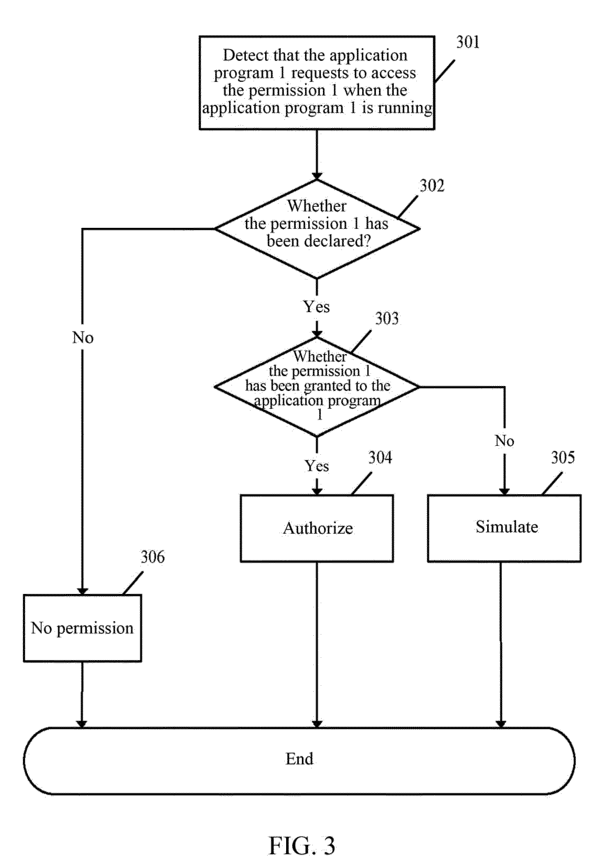

Still the application program 1 is taken as an example to describe the application program management method described in the present invention, and FIG. 3 is a second flow chart of implementing the application program management in the embodiment of the present invention, as shown in FIG. 3, the following steps are included:
in step 301, when the application program 1 is running, the terminal detects the operation of the application program 1 requesting to access the system resources corresponding to the permission 1.

In step 302, it is to determine whether the application program 1 has declared the permission 1.

The terminal checks whether the application program 1 has declared the permissions 1 according to the ID of the application program 1; if yes, step 303 is executed; otherwise, step 306 is executed.

In step 303, it is to determine whether the permission 1 has been granted to the application program 1, if yes, step 304 is executed; otherwise, step 305 is executed.

According to the ID of the application program 1, and in combination with the permission control table, it is to determine whether the permission 1 has been granted to the application program 1, if yes, step 304 is executed, otherwise step 305 is executed.

In step 304, the application program 1 is granted to access the system resources corresponding to the permission 1, and an execution result is returned to the application 1, and the process ends.

In step 305, it is to simulate the operation executed for the application program 1 accessing the system resources corresponding to the permission 1, and a simulated execution result is returned to the application program 1, and the process ends.

In step 306, no permission 1 is returned to the application program 1, and the process ends.

It should be noted that, there are more than 100 permissions in Android, in practical applications, only the function interfaces (the function interfaces are used to be called to access the system resources corresponding to the permissions) which are sensitive to the data security and the user charges security need to be controlled, corresponding function interfaces with the simulation function are developed to replace the function interfaces whose call are controlled, and the developed function interfaces with the simulation function are used for the application program to call to return simulated execution results; for function interfaces that do not threaten the data security and the user charges security, the application program may be allowed to call them directly.

For users, sensitive and important permissions mainly includes: permission of network access; permission of making calls; permissions of receiving and sending short messages and multimedia messages; permission of taking photos; permission of positioning, permission of accessing the call record, and permission of accessing the address book and so on;
when a function interface with the simulation capability is developed for the application program to call to return a simulated execution result, according to the functions that may be achieved by the permissions declared by the application program, different simulation ways need to be used to return a failure message or forged data to the application program, thus avoiding the application program accessing the system resources which brings losses of the user.

An example of returning a failure message is shown as Table 4:

**Table 4**

| Functions that may be achieved by permissions declared by the application program | Simulation way | Remark |
|---|---|---|
| Access Internet | Return network failure when establishing a network connection | |
| Call | Fail to call because of no signal | |
| Send and receive short messages | Fail to send and receive text messages | |
| ...... | ...... | |

An example of returning forged data is shown in Table 5:

**Table 5**

| Functions that may be achieved by permissions declared by the application program | Simulation way | Remark |
|---|---|---|
| Acquire the local number | Return a string of numbers randomly generated | |
| Position | Return coordinates randomly generated | |
| Acquire the address book of the terminal | Return a forged address book randomly generated | |

When the application program needs to use the system resources to acquire the local phone number, position and access the address book of the terminal, while the permission corresponding to the system resources is not granted to the application program, the way of making forged data is used to deceive the application program, so as to protect the user sensitive information from being leaked.

In summary, by means of the technical solution of the embodiment of the present invention, the user can operate through the interface provided by the terminal to decide whether to grant the permissions to the application program, and for the permission rejected to be granted to the application program, when the application program is running, an execution result is returned to the application program through the simulation, making the application program run properly, the user can reject granting unnecessary permissions to the application program according to functions actually needed by the application program, so as to avoid the leakage of user sensitive information and malicious consumption of the charges which are caused by that too many permissions are granted to the application program, thus guaranteeing the user data and property safety.

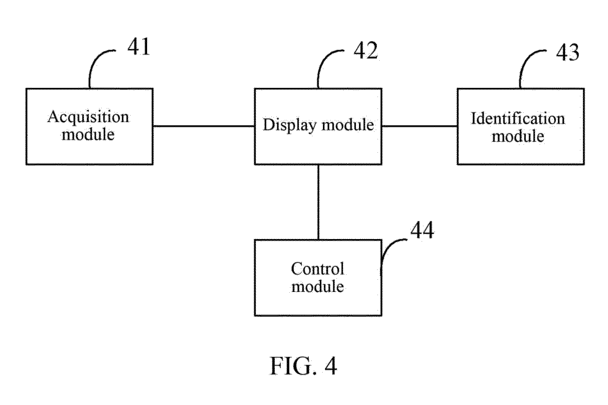

The embodiment of the present invention describes an application program management device, and as shown in FIG. 4, the device comprises:
an acquisition module 41, configured to acquire a list of permissions declared by an application program;
a display module 42, configured to display an interface indicating whether individual permissions in the list of permissions are granted to the application program;
an identification module 43, configured to, in accordance with the acquired operations on the interface, identify whether individual permissions in the list of permissions are granted to the application program in a permission control table.

Wherein, the device further comprises:
a control module 44, configured to, when the application program is running and when determining that the application program needs to access the system resources corresponding to the first permission, control the operations of the application program accessing the system resources in accordance with the list of permissions declared by the application program as well as the permission control table.

Wherein, the control module 44 further comprises: a determination unit, a first control unit and a second control unit (not shown in FIG. 4);
the determinate unit is configured to determine whether the first permission has been declared in the list of permissions of the application program;
if yes, trigger the first control unit to control the operations of the application program accessing the system resources according to the permission control table; otherwise, trigger the second control unit to return no permission for accessing the system resources corresponding to the first permission to the application program.

Wherein, the first control unit is further configured to:
according to the permission control table, determine whether the first permission is granted to the application program;
if yes, allow to execute the operations of the application program accessing the system resources corresponding to the first permission, and return an execution result to the application program;
otherwise, simulate the operations of accessing the system resources corresponding to the first permission, and return a simulated execution result to the application program.

In practical applications, the acquisition module 41, the identification module 43 and the control module 44 may be implemented by Central Processing Unit (CPU), Digital Signal Processor (DSP) or Field Programmable gate array (FPGA) in the application program management device; the display module 42 can be implemented by the graphics processing unit (GPU) in the application program management device.

The embodiment of the present invention further provides a terminal, comprising the application program management device shown in FIG. 4.

The embodiment of the present invention further provides a computer storage medium, in which computer-executable instructions are stored and used for executing the application program management method shown in FIG. 1 or FIG. 3.

In summary, by means of the technical solution of the embodiment of the present invention, by providing an interface for the user to select agreeing or denying the corresponding permission, and for each denied permission, when the application program is running, the system returns a result through the forged function, so that the application program runs properly, thus solving the problem in the related art that the user cannot select the permissions declared by the application program when the application program is installed. By means of the technical solutions of the embodiment of the present invention, the user can limit some unnecessary permissions declared by the application program in accordance with the functions actually needed by the application program, so as to fundamentally prevent some programs from reading the user sensitive information, making malicious calls and deliberately increasing the network traffic by declaring too many permissions, so as to avoid malicious damage to the user's personal property.

Those skilled in the art should understand that, an embodiment of the present invention can be provided as a method, a system, or a computer program product. Accordingly, the present invention can be implemented in the form of a hardware embodiment, a software embodiment, or a combination of software and hardware embodiments. Furthermore, the present invention can use the form of computer program products implemented in one or more computer usable storage media (including but not limited to the disk memory and optical memory, etc.) containing computer usable program codes.

The present invention is described by referring to the flowchart and/or block diagram of the method, device (system) and computer program product according to the embodiment of the present invention. It should be understood that the computer program instructions can be used to implement each process and/or block in the flow chart and/or block diagram, as well as a combination of processes and/or blocks in the flow chart and/or block diagram. These computer program instructions may be provided to the processor of a general purpose computer, a special purpose computer, an embedded processor or other programmable data processing device to generate a machine, such that the instructions executed by the processor of the computer or other programmable data processing device can generate a device configured to realize functions specified in one or more processes in the flow chart and/or one or more blocks in the block diagram.

These computer program instructions may also be stored in a computer-readable memory that can direct a computer or other programmable data processing device to function in a particular manner, such that the instructions stored in the computer readable memory produce a product including the instruction device, and the instruction device achieves functions specified in one or more processes in the flow chart and/or one or more blocks in the block diagram.

These computer program instructions may also be loaded onto a computer or other programmable data processing device, so that a series of operation steps executed in the computer or other programmable device can be used to produce the processing procedures implemented by the computer, so that the instructions executed in the computer or other programmable device can be used for realizing the functions specified in one or more processes of the flow chart and/or one or more blocks in the block diagram.

The above is only preferred embodiments of the present invention, and it should be noted that, for those of ordinary skilled in the art, without departing from the principle of the present invention, a number of improvements and modifications can be made, and these improvements and modifications should also be considered to be within the protection scope of the present invention.

## Claims

1. An application program management method, comprising:
acquiring a list of permissions declared by the application program, displaying an interface indicating whether individual permissions in the list of permissions are granted to the application program;
according to acquired operations on the interface, identifying whether individual permissions in the list of permissions are granted to the application program in a permission control table.

2. The method of claim 1, wherein, the method further comprises:
when determining that the application program needs to access system resources corresponding to a first permission, controlling operations of the application program accessing the system resources according to the list of permissions declared by the application program as well as the permission control table.

3. The method of claim 2, wherein, said controlling operations of the application program accessing the system resources according to the list of permissions declared by the application as well as the permission control table comprises:
determining whether the first permission has been declared in the list of permissions of the application program;
if yes, controlling the operations of the application program accessing the system resources according to the permission control table; otherwise, returning no permission for accessing the system resources corresponding to the first permission to the application program.

4. The method of claim 3, wherein, said controlling the operations of the application program accessing the system resources according to the permission control table comprises:
according to the permission control table, determining whether the first permission is granted to the application program;
if yes, allowing the operations executed for the application program accessing the system resources corresponding to the first permission, and returning an execution result to the application program;
otherwise, simulating the operations executed for accessing the system resources corresponding to the first permission, and returning a simulated execution result to the application program.

5. The method of claim 4, wherein, said simulating the operations executed for accessing the system resources corresponding to the first permission and returning a simulated execution result to the application program comprises:
calling a preset simulation function, simulating the operations executed for the application program accessing the system resources corresponding to the first permission, returning an operation failure message to the application program, or returning forged data to the application program; or,
generating a simulation function for the current operations of the application program, calling the simulation function to simulate the operations executed for the application program accessing the system resources corresponding to the first permission, returning an operation failure message to the application program, or returning forged data to the application program; or
for the first permission, generating a corresponding simulation function, calling the simulation function to simulate the operations executed for the application program accessing to the system resources corresponding to the first permission, returning an operation failure message to the application program, or returning forged data to the application program.

6. The method of claim 1, wherein, parameters in the permission control table comprises: name of the application program, a permission declared by the application program, and whether the permission declared is granted to the application program.

7. The method of any one of claims 1 to 6, wherein, when displaying the interface indicating whether the individual permissions in the list of permissions are granted to the application program, the method further comprises: displaying system resources corresponding to each permission in the list of permissions, as well as risks brought after granting the permissions in the list of permissions to the application program.

8. An application management device, comprising:
an acquisition module, configured to acquire a list of permissions declared by an application program;
a display module, configured to display an interface indicating whether individual permissions in the list of permissions are granted to the application program;
an identification module, configured to identify whether individual permissions in the list of permissions are granted to the application program according to acquired operations on the interface in a permission control table.

9. The device of claim 8, wherein, the device further comprises:
a control module, configured to, when determining that the application program needs to access system resources corresponding to the first permission, control operations of the application program accessing the system resources according to the list of permissions declared by the application program as well as the permission control table.

10. The device of claim 9, wherein, the control module further comprises: a determination unit, a first control unit and a second control unit;
the determination unit is configured to determine whether the first permission has been declared in the list of permissions of the application program;
if yes, trigger the first control unit to control the operations of the application program accessing the system resources according to the permission control table; otherwise, trigger the second control unit to return no permission for accessing the system resources corresponding to the first permission to the application program.

11. The device of claim 10, wherein, the first control unit is further configured to:
according to the permission control table, determine whether the first permission is granted to the application program;
if yes, allow the operations executed for the application program accessing the system resources corresponding to the first permission, and return an execution result to the application program;
otherwise, simulate the operations executed for accessing the system resources corresponding to the first permission, and return a simulated execution result to the application program.

12. The device of claim 11, wherein, the first control unit is further configured to:
call a preset simulation function, simulate the operations executed for the application program accessing the system resources corresponding to the first permission, and return an operation failure message to the application program, or return forged data to the application program; or,
generate a simulation function for the current operations of the application program, call the simulation function to simulate the operations executed for the application program accessing the system resources corresponding to the first permission, return an operation failure message to the application program, or return forged data to the application program;
for the first permission, generate a corresponding simulation function, and call the simulation function to simulate the operations executed for the application program accessing the system resources corresponding to the first permission, or return an operation failure message to the application program, or return forged data to the application program.

13. The device of claim 8, wherein, parameters in the permission control table comprise: name of the application program, a permission declared by the application program, as well as whether the permission declared is granted to the application program.

14. The device of any one of claims 8 to 13, wherein, the display module is further configured to: when displaying the interface indicating whether the individual permissions in the list of permissions are granted to the application program, display system resources corresponding to each permission in the list of permissions, as well as risks brought after granting the permissions in the list of permissions to the application program.

15. A terminal, comprising the application program management device of any one of claims 8 to 14.

16. A computer storage medium, in which computer-executable instructions are stored and used for executing the application program management method of any one of claims 1 to 7.
